# EUROPÄISCHE PATENTANMELDUNG

(11) **EP 1 975 939 A2**
(43) Veröffentlichungstag der Anmeldung: **01.10.2008**
(21) Anmeldenummer: 08450043.8
(22) Anmeldetag: 28.03.2008
(51) Int. Cl.: G11B 33/04

(54) **Verpackung für einen flächigen Datenträger**

(30) Priorität: 30.03.2007 AT 5002007
(71) Anmelder: Tekaef Media Gard GmbH, A 4910 Ried (AT)
(72) Erfinder: Christian Maass, 4040 Linz (AT)
(74) Vertreter: Hübscher, Helmut

(57) **Zusammenfassung**

Es wird eine Verpackung für einen flächigen Datenträger (2) mit einer eine Aufnahmeaussparung (3) für den Datenträger (2) aufweisenden Grundplatte (1) und mit zwei die Aufnahmeaussparung (3) auf beiden Seiten der Grundplatte (1) abdeckenden Deckfolien (4, 5) beschrieben, von denen eine eine Solltrennlinie (6) bildet, die die beiden Enden (7) einer sich durch das Aufreißen der Solltrennlinie (6) ergebenden Entnahmeöffnung (8) verbindet und einen um eine durch die beiden Enden (7) der Entnahmeöffnung (8) bestimmte Basis aufbiegbaren Klappdeckel (10) begrenzt, wobei sich die Entnahmeöffnung (8) über eine Länge entsprechend der in Richtung dieses Randbereiches (9) gemessenen lichten Weite der Aufnahmeaussparung (3) erstreckt. Um ein unbeabsichtigten Aufreißen der Solltrennlinie (6) zu unterbinden, wird vorgeschlagen, dass die Entnahmeöffnung (8) in einem Randbereich (9) der Aufnahmeaussparung (3) vorgesehen ist und dass sich die Solltrennlinie (6) ausgehend von den beiden Enden (7) der Entnahmeöffnung (8) in den Bereich der Aufnahmeaussparung (3) erstreckt.

## Beschreibung

Die Erfindung bezieht sich auf eine Verpackung für einen flächigen Datenträger mit einer eine Aufnahmeaussparung für den Datenträger aufweisenden Grundplatte und mit zwei die Aufnahmeaussparung auf beiden Seiten der Grundplatte abdeckenden Deckfolien, von denen eine eine Solltrennlinie bildet, die die beiden Enden einer sich durch das Aufreißen der Solltrennlinie ergebenden Entnahmeöffnung verbindet und einen um eine durch die beiden Enden der Entnahmeöffnung bestimmte Basis aufbiegbaren Klappdeckel begrenzt, wobei sich die Entnahmeöffnung über eine Länge entsprechend der in Richtung dieses Randbereiches gemessenen lichten Weite der Aufnahmeaussparung erstreckt.

Um flächige elektronische Datenträger, insbesondere scheibenförmige Datenträger, zu versenden, ist es bekannt, Verpackungen in Form von Postkarten vorzusehen, die aus einer rechteckigen Grundplatte mit einer an die Umrissform des Datenträgers angepassten Aufnahmeaussparung und aus zwei diese Aufnahmeaussparung beidseitig abdeckenden Deckfolien bestehen. Da die Dicke der Grundplatte an die des Datenträgers angeglichen ist, weist die Verpackung eine die Dicke des Datenträgers kaum übersteigende Dicke auf. Zur Entnahme des Datenträgers ist eine Entnahmeöffnung vorzusehen, die sich in einem Randbereich der Aufnahmeaussparung erstreckt, und zwar über eine der lichten Weite der Aufnahmeaussparung entsprechenden Länge. Wird diese Entnahmeöffnung durch einen Schlitz in einer der Deckfolien gebildet (DE 20108193 U1) so ergibt sich der Nachteil, dass der Datenträger unbefugt entnommen werden kann. Aus diesem Grund ist es vorteilhaft, zur Entnahme des Datenträgers eine Solltrennlinie vorzusehen, die erst nach ihrem Aufreißen die Entnahmeöffnung ergibt. Die sich im Wesentlichen entlang eines Randbereiches der Aufnahmeaussparung erstreckenden Solltrennlinien haben jedoch den Nachteil, dass bei einer Biegebelastung der Verpackung die Gefahr besteht, dass die Solltrennlinie unbeabsichtigt zumindest bereichsweise aufgetrennt wird. Vergleichbare Schwierigkeiten ergeben sich bei anderen bekannten Verpackungen (FR 2 868 398 A1, GB 2 311 489 A), bei denen eine der Deckfolien für die den Datenträger aufnehmende Grundplatte eine Solltrennlinie bildet, die einen um eine durch die beiden Entnahmeöffnungen bestimmte Basis aufbiegbaren Klappdeckel begrenzt, weil die Solltrennlinie im Bereich eines Randes des Datenträgers bzw. der Aufnahmeaussparung des Datenträgers verläuft, sodass bei einer Biegebeanspruchung der Verpackung insbesondere der Bereich der Solltrennlinie einer das Aufreißen der Solltrennlinie unterstützenden Zugbelastung quer zur Solltrennlinie ausgesetzt wird. Da solche Biegebelastungen der Verpackungen bei einer Förderung zwischen Förderrollen unvermeidbar sind, wie sie für die automatische Postverteilung eingesetzt werden, entsprechen diese bekannten Verpackungen nicht den postalischen Vorgaben.

Der Erfindung liegt somit die Aufgabe zugrunde, eine Verpackung der eingangs geschilderten Art für einen flächigen Datenträger so auszugestalten, dass die Gefahr eines unbeabsichtigten Aufreißens der Solltrennlinie aufgrund einer Biegebelastung der Verpackung ausgeschlossen werden kann.

Die Erfindung löst die gestellte Aufgabe dadurch, dass die Entnahmeöffnung in einem Randbereich der Aufnahmeaussparung vorgesehen ist und dass sich die Solltrennlinie ausgehend von den beiden Enden der Entnahmeöffnung in den Bereich der Aufnahmeaussparung erstreckt.

Zufolge dieser Maßnahmen verläuft ein wesentlicher Abschnitt der Solltrennlinie im Bereich des von der Grundplatte aufgenommenen Datenträgers, der einen Teil der Biegebelastung aufnimmt und eine Versteifung der Verpackung insbesondere im Bereich des Verlaufes der Solltrennlinie darstellt, sodass die auf die Deckfolie mit der Solltrennlinie einwirkenden Biegebelastungen auf ein Maß beschränkt werden, das ein Aufreißen der Solltrennlinie ausschließt. Trotzdem wird eine einfache Entnahme des Datenträgers aus der Verpackung sichergestellt, weil die Solltrennlinie einen Klappdeckel begrenzt, der nach dem Aufreißen der Solltrennlinie um eine durch die Enden der Entnahmeöffnung bestimmte Basis aufgebogen werden kann, sodass nach dem Aufbiegen des Klappdeckels der Datenträger über die nunmehr freigegebene Entnahmeöffnung der Verpackung quer zum der Entnahmeöffnung zugehörigen Randbereich der Aufnahmeaussparung entnommen werden kann. Der Datenträger kann aber auch in der geöffneten Verpackung aufbewahrt werden. Nach dem Einführen des Datenträgers in die Aufnahmeaussparung kann ja der Klappdeckel wieder geschlossen werden.

Besonders vorteilhafte Konstruktionsbedingungen ergeben sich, wenn die Solltrennlinie ein bezüglich einer mittigen Normalen auf den Bereich der Aufnahmeaussparung mit der Entnahmeöffnung symmetrischen Verlauf aufweist, weil in diesem Fall die zueinander symmetrischen Äste der Solltrennlinie in übereinstimmender Weise durch den Datenträger abgestützt und folglich beide Äste in gleicher Weise vor einem unbeabsichtigten Öffnen geschützt werden. Dieser Anforderung wird insbesondere ein Klappdeckel mit einer dreieckförmigen Grundform gerecht, die darüber hinaus eine einfache Handhabung gewährleistet. Der sich durch die Dreieckform ergebenden Eckbereich des Klappdeckels erlaubt ja einen einfachen, mittigen Angriff am Klappdeckel, um die Solltrennlinie ausgehend von diesem Eckbereich zu den beiden Enden hin aufzureißen.

Erstreckt sich der Klappdeckel bis in den Mittenbereich der Aufnahmeaussparung, so kann die Solltrennlinie über den Datenträger in vorteilhafter Weise abgestützt werden, ohne die Halterung in der geöffneten Verpackung zu beeinträchtigen.

Um die Sicherheit gegenüber einem unbeabsichtigten Aufreißen der Solltrennlinie zu erhöhen, kann die Grundplatte zumindest auf einer Seite der Aufnahmeaussparung die Biegesteifigkeit der Grundplatte verringernde Abschnitte aufweisen. Wegen der durch diese Abschnitte verringerten Biegesteifigkeit der Grundplatte können keine höheren Spannungen von der Grundplatte auf den Folienabschnitt mit der Solltrennlinie übertragen werden, sodass dadurch bedingte Kräfte quer zur Solltrennlinie vermieden werden. Diese die Biegesteifigkeit verringernden Grundplattenabschnitte können durch eine abschnittsweise unterschiedliche Werkstoffwahl sichergestellt werden. Besonders einfache Konstruktionsverhältnisse ergeben sich allerdings dann, wenn diese biegeweicheren Abschnitte durch Ausnehmungen in der Grundplatte erreicht werden, wobei es keinesfalls zwingend ist, diese Ausnehmungen als Durchbrechungen der Grundplatte auszubilden. Beim schichtweisen Aufbau der Grundplatte könnte z. B. im Bereich der Ausnehmungen auf zumindest eine Schicht verzichtet werden.

In der Zeichnung ist der Erfindungsgegenstand beispielsweise dargestellt. Es zeigen
- Fig. 1: eine erfindungsgemäße Verpackung für einen flächigen Datenträger in einer zum Teil aufgerissenen Draufsicht,
- Fig. 2: einen Schnitt nach der Linie II-II der Fig. 1 und
- Fig. 3: eine der Fig. 1 entsprechende Darstellung einer Ausführungsvariante einer erfindungsgemäßen Verpackung.

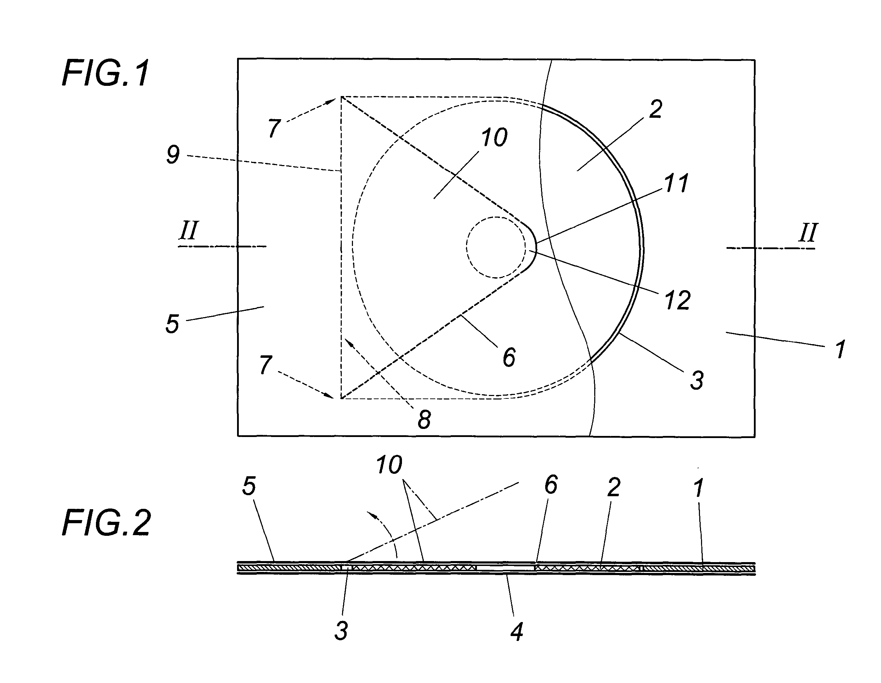

Die Verpackung gemäß dem Ausführungsbeispiel nach den Fig. 1 und 2 umfasst eine rechteckige Grundplatte 1, die eine an die Umrissform eines scheidenförmigen Datenträgers 2 angepasste Aufnahmeaussparung 3 bildet. Auf der Ober- und Unterseite dieser Grundplatte 1 sind Deckfolien 4, 5 aufkaschiert, die die Aufnahmeaussparung 3 beidseitig abdecken und damit den Datenträger 2 in der Aufnahmeaussparung 3 einschließen. Die Deckfolie 5 ist mit einer Solltrennlinie 6 versehen, die die Enden 7 einer Entnahmeöffnung 8 verbindet. Diese Entnahmeöffnung 8 erstreckt sich entlang eines Randbereiches der Aufnahmeaussparung 3 über eine der lichten Weite der Aufnahmeaussparung 3 entsprechenden Länge, wie dies der Fig. 1 entnommen werden kann. Die Solltrennlinie 6 selbst ragt in den Mittenbereich der Aufnahmeaussparung 3 vor und begrenzt einen Klappdeckel 10, der um eine durch die beiden Enden 7 der Entnahmeöffnung 8 bestimmte Basis zur Freigabe der Entnahmeöffnung 8 aufgebogen werden kann, wie dies in der Fig. 2 strichpunktiert angedeutet ist. Gemäß dem Ausführungsbeispiel weist der Klappdeckel 10 eine durch ein gleichschenkeliges Dreieck bestimmte Grundform auf. Die Solltrennlinie, die vorzugsweise durch eine Perforation gebildet wird, ist im Verbindungsbereich zwischen den beiden von den Enden 7 ausgehenden Ästen durch einen Einschnitt 11 aufgetrennt, sodass sich eine Aufreißlasche 12 zur besseren Handhabung ergibt.

Da ein wesentlicher Teil der Solltrennlinie 6 im Bereich des Datenträgers 2 verläuft, stellt der Datenträger 2 eine Versteifung für die Verpackung im Bereich der Solltrennlinie 6 dar, sodass die Biegebelastung der Deckfolie 5 im Bereich der Solltrennlinie 6 beschränkt wird, wenn die Verpackung beispielsweise zwischen Förderrollen hindurch gefördert wird. Dies bedeutet, dass die Gefahr eines unbeabsichtigten Aufreißens der Solltrennlinie 6 ausgeschlossen werden kann. Zum Entnehmen des Datenträgers 2 aus der geschlossenen Verpackung ist zunächst der Klappdeckel 10 an der Aufreißlasche 12 zu erfassen, um durch ein Abheben der Aufreißlasche 12 die Solltrennlinie 6 ausgehend von der Aufreißlasche 12 bis zu den Enden 7 der Entnahmeöffnung 8 aufzureißen und den Klappdeckel 10 zur Freigabe der Entnahmeöffnung 8 um eine die beiden Enden 7 verbindende Achse aufzubiegen. Der Datenträger 2 kann somit nach dem Öffnen des Klappdeckels 10 in Richtung der Entnahmeöffnung 8 aus der Aufnahmeaussparung 3 der Verpackung entnommen werden. Zur Aufbewahrung des Datenträgers 2 kann dieser wieder in die Aufnahmeaussparung 3 eingesetzt und der Klappdeckel 10 geschlossen werden.

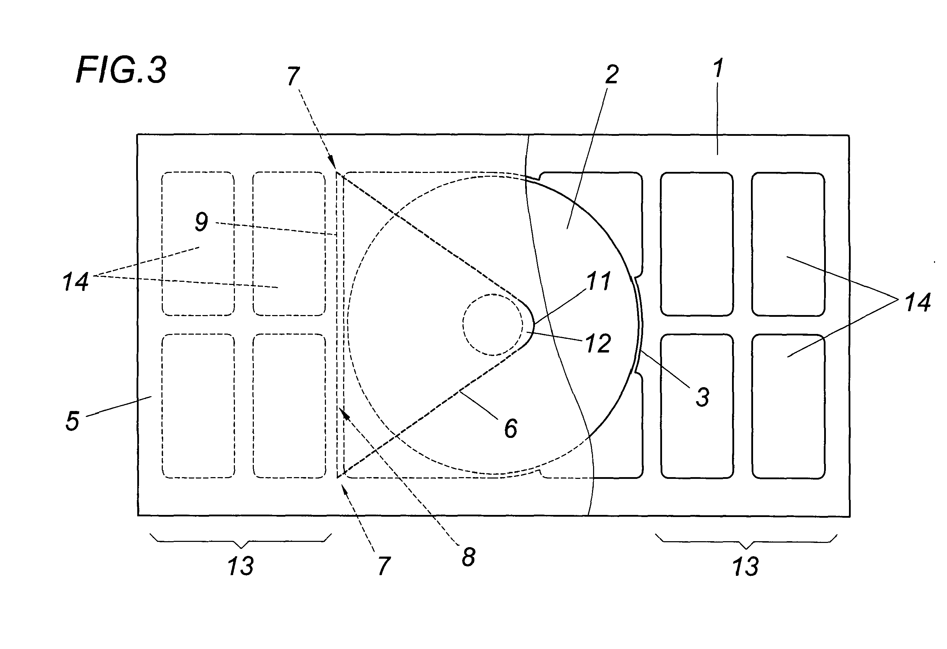

Zum Unterschied zu dem Ausführungsbeispiel nach den Fig. 1 und 2 ist die Grundplatte 1 der Verpackung nach der Fig. 3 zu beiden Seiten der Aufnahmeaussparung 3 verlängert, was die Gefahr einer Übertragung von Zugspannungen auf die Deckfolie 5 im Bereich der Solltrennlinie 6 aufgrund von Biegebelastungen der Grundplatte 1 und damit die Gefahr eines unbeabsichtigten Aufreißens der Solltrennlinie 6 erhöht. Um dieser Gefahr zu begegnen, weist die Grundplatte 1 im Anschluss an die Aufnahmeaussparung 3 für den Datenträger 2 Abschnitte 13 mit einer geringeren Biegesteifigkeit auf. Diese Abschnitte 13 könnten durch einen biegeweicheren Grundplattenwerkstoff verwirklicht werden. Einfachere Konstruktionsbedingungen ergeben sich jedoch im Allgemeinen dadurch, dass die biegeweicheren Abschnitte 13 Ausnehmungen 14 der Grundplatte 1 umfassen, wie dies in der Fig. 3 angedeutet ist. Die die Biegesteifigkeit der Grundplatte 1 im Anschluss an die Aufnahmeaussparung 3 herabsetzenden Abschnitte 13 verhindern die Übertragung von Biegespannungen auf den Grundplattenbereich mit der Aufnahmeaussparung 3, sodass keine das Aufreißen der Solltrennlinie 6 bedingenden Kräfte von der Grundplatte 1 auf die Deckfolie 5 mit der Solltrennlinie 6 übertragen werden.

## Patentansprüche

1. Verpackung für einen flächigen Datenträger (2) mit einer eine Aufnahmeaussparung (3) für den Datenträger (2) aufweisenden Grundplatte (1) und mit zwei die Aufnahmeaussparung (3) auf beiden Seiten der Grundplatte (1) abdeckenden Deckfolien (4, 5), von denen eine eine Solltrennlinie (6) bildet, die die beiden Enden (7) einer sich durch das Aufreißen der Solltrennlinie (6) ergebenden Entnahmeöffnung (8) verbindet und einen um eine durch die beiden Enden (7) der Entnahmeöffnung (8) bestimmte Basis aufbiegbaren Klappdeckel (10) begrenzt, wobei sich die Entnahmeöffnung (8) über eine Länge entsprechend der in Richtung dieses Randbereiches (9) gemessenen lichten Weite der Aufnahmeaussparung (3) erstreckt, **dadurch gekennzeichnet, dass** die Entnahmeöffnung (8) in einem Randbereich (9) der Aufnahmeaussparung (3) vorgesehen ist und dass sich die Solltrennlinie (6) ausgehend von den beiden Enden (7) der Entnahmeöffnung (8) in den Bereich der Aufnahmeaussparung (3) erstreckt.

2. Verpackung nach Anspruch1, **dadurch gekennzeichnet, dass** die Solltrennlinie (6) einen bezüglich einer mittigen Normalen auf den Randbereich (9) der Aufnahmeaussparung (3) mit der Entnahmeöffnung (8) symmetrischen Verlauf aufweist.

3. Verpackung nach Anspruch 1 oder 2, **dadurch gekennzeichnet, dass** der Klappdeckel (10) eine dreieckfömige Grundform aufweist.

4. Verpackung nach einem der Ansprüche 1 bis 3, **dadurch gekennzeichnet, dass** sich der Klappdeckel (10) bis in den Mittenbereich der Aufnahmeaussparung (3) erstreckt.

5. Verpackung nach einem der Ansprüche 1 bis 4, **dadurch gekennzeichnet, dass** die Grundplatte (1) zumindest auf einer Seite der Aufnahmeaussparung (3) die Biegesteifigkeit der Grundplatte (1) verringernde Abschnitte (13) aufweist.

6. Verpackung nach Anspruch 5, **dadurch gekennzeichnet, dass** die die Biegesteifigkeit der Grundplatte (1) verringernden Abschnitte (13) Ausnehmungen (14) der Grundplatte (1) umfassen.
